# FASCICULE DE BREVET EUROPEEN

(11) **EP 0 514 461 B1**
(45) Date de publication et mention de la délivrance du brevet: **12.10.1994**
(21) Numéro de dépôt: 91904296.0
(22) Date de dépôt: 07.02.1991
(51) Int. Cl.: G05D 1/02

(54) **PROCEDE DE CREATION OU DE RESTITUTION D'UN TRAJET PAR UN VEHICULE ET VEHICULE ADAPTE A CE PROCEDE**
VERFAHREN ZUR ERZEUGUNG UND WIEDERGABE EINER STRECKE DURCH EIN FAHRZEUG UND FÜR DIESES VERFAHREN GEEIGNETES FAHRZEUG
METHOD FOR PLOTTING OR REPRODUCING A ROUTE WITH A VEHICLE, AND VEHICLE ADAPTED THEREFOR

(30) Priorité: 08.02.1990 FR 9001457
(43) Date de publication de la demande: 25.11.1992
(73) Titulaire: COMMISSARIAT A L'ENERGIE ATOMIQUE, 75015 Paris (FR)
(72) Inventeur: DETRICHE, Jean-Marie, F-78590 Noisy-le-Roy (FR)
(74) Mandataire: Ilgart, Jean-Christophe
(86) Numéro de dépôt international: FR9100095
(87) Numéro de publication internationale: WO9112571

(56) Documents cités:
- EP-A- 0 142 594
- EP-A- 0 146 428
- EP-A- 0 236 614
- EP-A- 0 278 853
- DE-A- 3 315 051
- DE-A- 3 912 353
- US-A- 4 727 492

## Description

L'invention se rapporte à un procédé de création ou alternativement de restitution du trajet d'un véhicule tel qu'un robot.

Elle s'applique particulièrement à des véhicules qui suivent normalement un même trajet de manière répétée mais dont le trajet peut cependant être modifié de temps en temps. En effet, parmi les systèmes connus, on connaît principalement des systèmes procédant par lecture d'un marquage au sol, et notamment les systèmes dits "filoguidés" dans lesquels le trajet est créé par un fil continu parcouru par un courant alternatif émettant un champ magnétique. Le fil est enterré dans le sol et le véhicule le parcourt suivant sa longueur à l'aide de capteurs de champ magnétique qui l'empêchent de dévier. Il est évident que le fil est coûteux à installer aussi bien qu'à déplacer. Des systèmes analogues comportent une bande tracée sur le sol et des capteurs de lecture optique.

Dans certaines installations, le fil de guidage forme tout un réseau, avec en particulier des bifurcations grâce auxquelles le véhicule peut accomplir des trajets différents ; le fil est complété par des bornes magnétiques ou optiques qui permettent d'activer certaines fonctions du véhicule quand celui-ci passe par ces bornes ou qui servent d'aiguillages aux bifurcations. Les inconvénients du système à fil unique subsistent cependant, car les possibilités de variation de trajet restent réduites, et le système constitué par les fils et les bornes devient dans ce cas très lourd.

On a enfin développé un système composé d'aimants permanents enterrés dans le sol par groupes de manière à constituer des bornes codées suivant des fonctions de commande (EP-A-0 278 853). Les bornes sont formées d'aimants groupés en ligne de façon à pouvoir remplacer le fil de guidage continu par des directions de guidage constituées par les alignements d'aimants. Quand le véhicule passe par une des bornes, la position de l'alignement lui indique le chemin qu'il devait suivre et éventuellement les actions de corrections de route, lui confirme que le sens de parcours est correct, et les polarités des aimants successifs fournissent par ailleurs, au moyen d'un code binaire ou ternaire, des fonctions de pilotage ou de travail du véhicule qui doivent être activées à ce moment.

Ce dernier système est plus pratique que les précédents mais il reste cependant difficile de modifier commodément le trajet ou les fonctions de travail (ce qui est envisagé grâce à des codes spéciaux qui peuvent prendre des significations différentes) et les bornes, qui servent à recaler l'orientation du véhicule, occupent une longueur relativement importante par rapport à la longueur totale du trajet.

L'invention est fondée avant tout sur les possibilités offertes par des environnements pourvus d'obstacles entre lesquels le véhicule évolue et par ailleurs parsemés de bornes de repérage. La combinaison des obstacles et des bornes permet, comme on le verra plus loin, de ne faire appel qu'à un nombre très restreint de bornes pour un nombre élevé de trajets possibles.

L'utilisation de bornes de repérage pour corriger les imprécisions de restitution d'une trajectoire apprise précédemment est exposée dans le brevet DE-A-33 15 051 qui constitue le préambule des revendications indépendantes.

On utilise encore couramment des bornes de repérage pour fournir la position d'un robot au moyen de localisations de ces bornes, ce qui implique que leur position est connue dans l'environnement et que le trajet du robot a été programmé de manière analytique. De tels systèmes impliquent des calculs assez lourds et nombreux qui sont absents ici, où les informations nécessaires pour définir le trajet du véhicule sont très peu nombreuses.

Le véhicule est quant à lui muni de capteurs des obstacles et de capteurs des bornes, ainsi que d'un système de pilotage comprenant au moins une fonction de suivi latéral des obstacles, et d'un système de commande sensible aux informations des capteurs. Ce système de commande est apte à commander le système de pilotage et comporte une mémoire.

Le procédé de création de trajet consiste tout d'abord à définir le trajet en associant des fonctions du système de pilotage à des parties, séparées par des bornes, du trajet projeté, a repérer les bornes par lesquelles passe le trajet, et finalement à enregistrer en mémoire, sous forme d'un tableau constitué de lignes (ou plus généralement de zones) dont chacune correspond à une des bornes de passage, les fonctions du système de pilotage qui sont actives près des bornes de passage respectives.

Pour créer le trajet, on peut envisager deux méthodes principales qui seront décrites en détail plus loin.

Le procédé de restitution ou de suivi d'un trajet consiste à repérer le passage du véhicule sur des bornes et, quand une borne de passage est atteinte, à lire sur un tableau enregistré dans la mémoire du système de commande des fonctions du système de pilotage et à activer ces fonctions jusqu'à la borne suivante. Ce procédé peut être perfectionné si les bornes de passage sont identifiées, le tableau étant alors lu en fonction de l'identification.

Le véhicule conçu pour l'exécution de ces procédés comprend avantageusement dans son système de pilotage une fonction de double suivi latéral d'obstacles entre deux obstacles latéraux à gauche et à droite du véhicule. Il peut encore comprendre une fonction d'avance en ligne droite.

Les fonctions de pilotage activées simultanément peuvent être multiples, d'autant plus qu'on peut y incorporer des fonctions plus spécialement liées au travail que le véhicule doit effectuer.

Les fonctions sont enregistrées ou activées soit à l'emplacement de la borne, soit un peu plus loin dans le sens de parcours du trajet.

Une caractéristique essentielle du système est que les bornes ne sont pas associées intrinsèquement à des fonctions. Elles peuvent éventuellement être toutes semblables et sont alors peu coûteuses et peu encombrantes ; chaque borne peut être constituée d'un aimant unique enterré dans le sol ou d'une marque optique sur un mur. Un tel choix n'est cependant pas incompatible avec un nombre relativement élevé de bornes disposées suivant un réseau dense, si une grande variété de trajets possibles est souhaitée. On peut encore, pour plus de sécurité et pour éviter des erreurs, individualiser chaque borne, par exemple en la constituant de marques définissant un code numérique. L'installation des bornes est alors plus compliquée, mais par rapport au système déjà mentionné où les bornes sont associées à des fonctions invariables, les modifications du trajet restent encore très simples à assurer et ne concernent que la programmation du véhicule.

On va maintenant décrire l'invention plus en détail à l'aide des figures suivantes annexées à titre illustratif et non limitatif :
- la figure 1 est une représentation possible d'un environnement et d'un trajet suivi par un véhicule robotisé ;
- la figure 2 est une vue schématique d'un véhicule robotisé ; et
- la figure 3 représente la constitution d'un tableau utilisé pour la restitution du trajet.

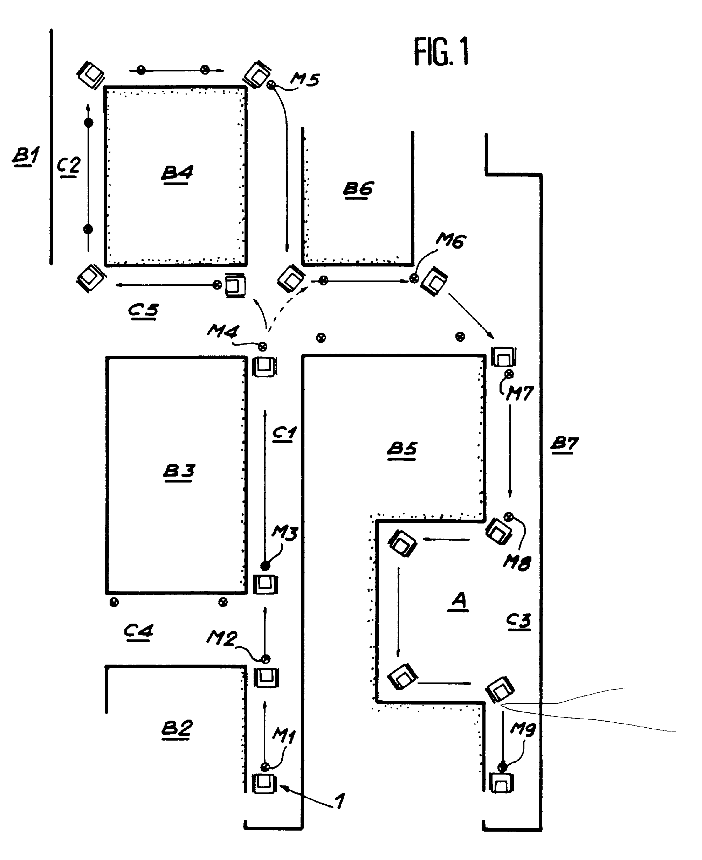

La topographie de l'environnement qui sert de fondement à la description suivante peut être dressée en considérant qu'il y a, sur la figure 1, sept obstacles numérotés B1 à B7. Ces obstacles sont séparés par divers corridors : un corridor C1 sépare les obstacles B2, B3 et B4 des obstacles B5 et B6 ; un corridor C2 sépare l'obstacle B1 de l'obstacle B4 ; un corridor C3 sépare les obstacles B5 et B6 de l'obstacle B7 ; un corridor C4 sépare ensuite l'obstacle B2 de l'obstacle B3 ; enfin, un corridor C5 sépare les obstacles B3 et B4 d'une part, B5 et B6 d'autre part, tout en coupant le corridor C1 en croix.

Les obstacles sont ici sensiblement rectangulaires à l'exception de l'obstacle B5 qui est pourvu d'une cavité A correspondant à un élargissement du corridor à droite C3. D'une manière générale, ils peuvent cependant avoir des bords de forme quelconque.

Le véhicule 1 circule dans les corridors et contourne les obstacles. Les obstacles peuvent être usuellement des murs mais également des obstacles en creux tels que des fossés ou des escaliers. On peut encore mettre en oeuvre l'invention avec des obstacles matérialisés d'une autre manière (clôtures, piquets, bandes continues peintes au sol, etc.).

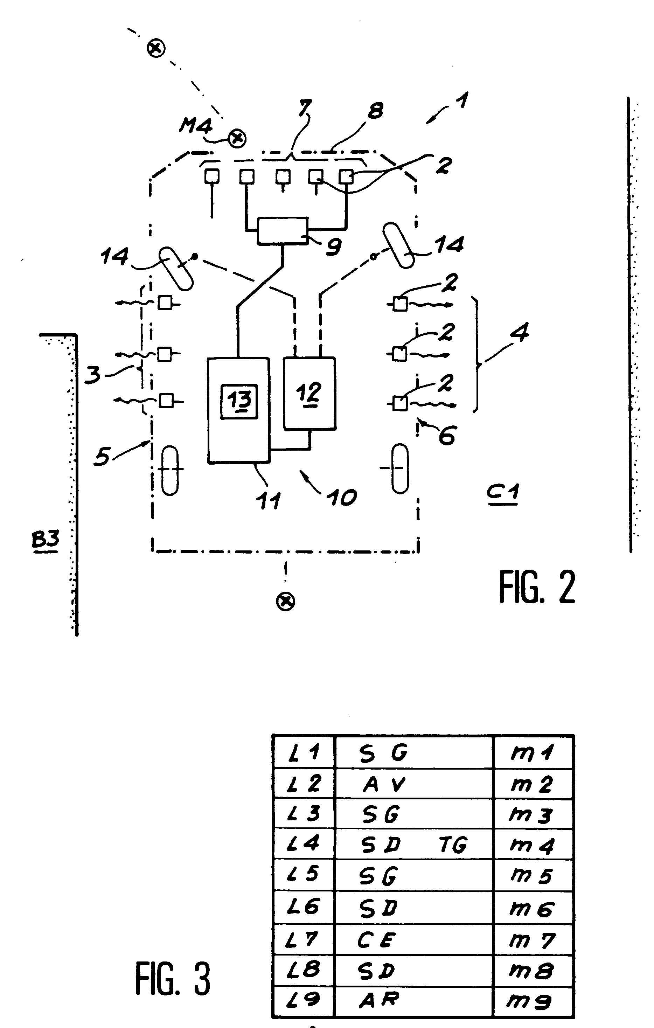

Quoi qu'il en soit, le véhicule 1 est muni, comme on le schématise sur la figure 2, de capteurs proximétriques 2 alignés suivant deux batteries à gauche 3 et à droite 4 sur ses flancs gauche 5 et droit 6, ainsi que suivant une batterie avant 7 sur sa face avant 8. Les capteurs proximétriques 2 sont sensibles à la présence des obstacles ; il peut s'agir de détecteurs à infrarouges ou ultrasons ; dans le cas de fossés, ces détecteurs sont orientés obliquement vers le bas pour repérer l'absence de sol. Les batteries latérales 3 et 4 permettent de détecter les obstacles latéraux et la batterie avant 7 les obstacles à l'avant du véhicule.

Le véhicule 1 est également muni de capteurs de bornes 9. Ici, un seul a été représenté ; il s'agit d'un capteur de champ magnétique en dessous du véhicule 1 et près de la face avant 8. Un tel capteur de bornes 9 est apte à détecter la présence d'aimants permanents enterrés dans le sol au-dessus desquels passe le véhicule 1. Une rangée transversale de capteurs de champs magnétiques peut être employée pour une meilleure détection. Des bornes d'autres natures peuvent être employées, par exemple des bornes à repérage optique peintes sur les murs ou le sol sous forme de marques, de signes ou, dans une réalisation plus élaborée, de codes à barres par exemple. On utilisera alors en tant que capteurs de bornes des caméras éventuellement situées sur les faces latérales 5 et 6 du véhicule 1.

Les emplacements des bornes ont été repérés par des croix entourées d'un cercle sur la figure 1. Neuf d'entre elles, qui suffisent à l'exécution du trajet qui va être décrit, ont été référencées M1 à M9. Il est cependant possible d'avoir un réseau de bornes plus dense et qui comprenne en particulier d'autres bornes en dehors du trajet, qui parsèment l'environnement et dont certaines ont été représentées à titre d'illustration. Ces bornes surnuméraires peuvent trouver emploi si le trajet est modifié.

Le véhicule 1 est muni d'un calculateur 10 dans lequel on peut distinguer un système de commande 11 sensible aux informations des capteurs 2 et 9, un système de pilotage 12 piloté par le système de commande 11 et une mémoire 13 incluse dans le système de commande 11. La mémoire 13 est remplie par le système de commande 11 au moment de la création du trajet ; au moment de la restitution d'un trajet, elle se comporte en mémoire morte et le système de commande 11 y prélève les informations nécessaires pour la commande du système de pilotage 12. Le système de pilotage 12 régit le mouvement des roues 14 motrices et éventuellement directrices du véhicule 1 par des transmissions non représentées, ou d'autres organes locomoteurs.

Le véhicule 1 se trouve au départ à l'entrée du corridor C1, entre les obstacles B2 et B5. Lancé en avant, il ne tarde pas à passer au-dessus de la première borne M1. Le capteur de bornes 9 le signale au système de commande 11 qui va lire dans la mémoire 13, comme on le représente sur la figure 3, une information de pilotage contenue dans une ligne L1 de la mémoire 13.

Les informations de pilotage sont constituées par un certain nombre de fonctions simples, telles que la fonction notée S_{G} dans la ligne L1 qui signifie que le véhicule 1 doit suivre un obstacle latéral situé à gauche. Ici, les capteurs de proximité 2 de la batterie à gauche 3 repèrent l'obstacle à gauche B2 que le véhicule 1 longe alors à une distance constante, déterminée à l'avance, en se déplaçant dans le corridor C1.

Le véhicule 1 finit par dépasser l'obstacle B2 et arriver devant le corridor C4. Il arrive toutefois à la borne M2 à ce moment, et la fonction A_{V} à la ligne L2 de la mémoire 13 est lue ; elle signifie que le véhicule 1 doit poursuivre son chemin vers l'avant sans se préoccuper de la présence ou de l'absence d'obstacles latéraux. Il est donc possible de franchir le corridor C4 et de s'introduire entre les obstacles à gauche et à droite B3 et B5. A ce moment, le passage au-dessus d'une troisième borne M3 incite à lire la ligne L3 de la mémoire 13 où il est indiqué qu'il faut à nouveau suivre un obstacle latéral à gauche, ici l'obstacle à gauche B3, et cette fonction de pilotage reste active jusqu'à ce que le corridor C5 soit atteint.

La borne M4 indique alors qu'il faut suivre un obstacle latéral situé sur la droite tout en tournant vers la gauche, ce qui est symbolisé par les nouvelles fonctions S_{D} et T_{G}. Le véhicule 1 obéit à ces instructions et s'engage dans le corridor C5 vers la gauche tout en dérivant progressivement vers sa droite jusqu'à arriver près de l'obstacle B4. Arrivé au corridor C2, il continue à longer l'obstacle B4 sur sa droite et tourne donc sans que de nouvelles instructions soient nécessaires.

Après avoir accompli environ les trois quarts du tour de l'obstacle B4, le véhicule 1 pénètre de nouveau dans le corridor C1, cette fois dans le sens opposé. Il rencontre alors une borne M5 qui lui indique, grâce à une nouvelle instruction S_{G} dans la ligne L5, qu'il doit à nouveau suivre un obstacle situé à sa gauche. Il se déplace latéralement tout en progressant dans le corridor C1 jusqu'à repérer l'obstacle à gauche B6 qu'il longe. Dans les mêmes conditions que pour l'obstacle B4, le véhicule 1 tourne ensuite vers sa gauche dans le corridor C5 jusqu'à arriver devant le corridor C3. Il rencontre alors une borne M6 associée à la ligne L6 contenant une nouvelle instruction S_{D} de suivi d'obstacle à droite. Le véhicule 1 se rapproche alors progressivement de l'obstacle à droite B5 et finit par tourner à droite en s'engageant dans le corridor C3. Il arrive peu après à une borne M7 associée à la ligne L7 et à la fonction C_{E} qui indique qu'il faut passer à égale distance des obstacles latéraux à droite et à gauche, ici B7 et B5. Cette fonction peut être intéressante pour les parties étroites de corridors ou pour passer des portes en particulier, car elle permet alors une meilleure précision du guidage. Elle peut aussi être combinée à d'autres fonctions, en particulier à des virages.

Une borne M8 située à l'entrée de la cavité A et contenant une nouvelle fonction de suivi d'obstacle à droite dévie le véhicule 1 pour lui faire suivre la lisière de la cavité A ; enfin, une dernière borne M9 permet d'arrêter le véhicule 1 grâce à une fonction d'arrêt AR.

Une caractéristique de ce procédé de restitution de trajet est la facilité avec laquelle le trajet peut être modifié. Si par exemple, arrivé à la borne M4, on désire éviter de contourner l'obstacle B4, il suffit d'effacer le contenu de la ligne L4 et de le remplacer par des instructions de virage à droite T_{D} et de suivi d'obstacle à gauche S_{G}. Le véhicule 1 arrive alors sur la paroi de l'obstacle B6 et sur la borne M6 directement après avoir atteint la borne M4, comme on le représente par la portion de trajet en pointillés. Il faut en outre supprimer la ligne L5 correspondant à la borne M5 devenue inutile et, le cas échéant, ajouter de nouvelles lignes d'instructions si le véhicule passe par de nouvelles bornes à la suite de cette modification de trajet.

D'autres possibilités sont encore offertes par un tel dispositif, notamment quand le véhicule n'est pas purement automatique mais comporte en outre un opérateur qui peut prendre les commandes. Il est alors possible de s'écarter du chemin normalement suivi pour s'acquitter d'un trajet spécial tel qu'une reconnaissance vers un endroit à côté du trajet. Quand ce trajet spécial est terminé, on revient à proximité de l'endroit où l'on avait quitté le trajet programmé et on reprend le pilotage automatique du véhicule avec les fonctions qui étaient actives avant d'exécuter le trajet spécial. Des fonctions telles que le suivi d'obstacle à gauche ou à droite et le centrage entre deux obstacles latéraux permettent au véhicule de revenir très rapidement sur le trajet programmé, même si le pilotage automatique est repris avec une légère erreur de position ou d'orientation du véhicule.

Si la remise en pilotage automatique est effectuée avec un véhicule qui est trop mal orienté, le trajet risquerait d'être effectué en sens inverse, ce qui égarerait complètement le véhicule. Cette éventualité est cependant peu probable, et il arrivera rapidement en pratique que la commande lue ne pourra être exécutée : si par exemple le véhicule est censé effectuer un suivi d'obstacle latéral et qu'il n'y a aucun obstacle de ce côté, ou un obstacle hors de portée des capteurs proximétriques 2, une alarme sera donnée.

Si les bornes sont rendues toutes différentes au moyen d'un codage, le tableau de la mémoire 13 contient, outre les instructions de pilotage, une information d'identification de la borne et la lecture de chaque ligne entraîne une opération de vérification de la borne sur laquelle se trouve le véhicule. S'il apparaît que la ligne lue ne possède pas le code de borne lu par le capteur de bornes 9, la ligne du tableau correspondant à la borne sur laquelle le véhicule se trouve effectivement est recherchée, et ce sont les fonctions de pilotage de cette ligne qui seront exécutées. Sur la figure 3, ces informations d'identification sont symbolisées par les quantités m1, m2,... m9.

Les fonctions lues à chaque ligne L peuvent être en nombre quelconque et peuvent d'ailleurs ne pas consister uniquement en des fonctions de pilotage. On peut y ajouter des fonctions liées à un travail que le véhicule doit accomplir à cet endroit. On peut encore faire en sorte que les fonctions ne soient pas déclenchées dès que le véhicule passe au-dessus de la borne considérée mais seulement à une certaine distance de la borne ou après une temporisation, si le véhicule est muni d'appareils de mesure adaptés. Le trajet peut donc être restitué avec une grande précision.

La création du trajet peut se faire suivant deux méthodes principales. La première d'entre elles est essentiellement graphique, implique une modélisation et peut d'ailleurs s'accomplir à l'aide de logiciels spécialisés. On commence par dresser une cartographie des obstacles et des bornes disponibles, puis on trace le trajet projeté, on repère graphiquement et on recense les bornes dites bornes de passage, ici M1 à M9, par lesquelles passe le trajet projeté et on décompose le trajet projeté en tronçons raccordés entre eux aux bornes de passage. On détermine ensuite aux bornes de passage quelles sont les fonctions qu'il faudrait appliquer au véhicule pour respecter autant que possible ce trajet projeté. Il est alors facile de créer le tableau associant chaque borne de passage aux fonctions qui doivent être actives quand le véhicule se trouve près de cette borne de passage, ou quand il parcourt le tronçon suivant, et de l'introduire dans la mémoire 13.

L'autre procédé de création s'effectue par apprentissage : le véhicule est piloté par un opérateur le long du trajet, et le système de commande 11 effectue le remplissage du tableau de la mémoire 13 ligne par ligne. Dès qu'une borne de passage est repérée par le capteur de bornes 9, une nouvelle ligne est alors réservée, puis remplie par un enregistrement des fonctions de pilotage qui sont actuellement actives ou qui vont être activées prochainement, avant la borne suivante, par l'opérateur.

## Revendications

1. Procédé de création d'un trajet dans un environnement pourvu d'obstacles (B) et parsemé de bornes de repérage pour un véhicule (1) équipé, de capteurs des bornes (9), d'un système de pilotage (12) et d'un système de commande (11) sensible aux informations des capteurs, apte à commander le système de pilotage et comportant une mémoire (13), consistant à repérer les bornes par lesquelles le trajet passe, caractérisé en ce qu'il consiste à définir le trajet en associant des fonctions du système de pilotage à des parties du trajet séparées par les bornes, et à enregistrer en mémoire, sous forme d'un tableau constitué de lignes (L) dont chacune correspond à une des bornes de passage (M), des fonctions du système de pilotage actives près des bornes de passage respectives, le véhicule comportant des capteurs des obstacles (2) et une des fonctions du système de pilotage étant une fonction de suivi latéral des obstacles.

2. Procédé de création d'un trajet suivant la revendication 1, caractérisé en ce que le trajet est défini graphiquement, les bornes de passage sont repérées, les fonctions du système de pilotage qu'il faut appliquer sont déduites de la configuration du trajet par rapport aux obstacles, et en ce que le tableau est créé en recensant les bornes de passage et, pour chacune des bornes de passage, les fonctions du système de pilotage actives près de ces bornes de passage.

3. Procédé de création d'un trajet suivant la revendication 1, caractérisé en ce que le trajet est défini en le faisant parcourir au véhicule, les fonctions du système de pilotage étant activées manuellement, les bornes de passage (M) sont repérées par les capteurs de bornes (9) et en ce que le tableau est créé en enregistrant, dès qu'une borne de passage est repérée, les fonctions du système de pilotage actives près de cette borne de passage.

4. Procédé de création d'un trajet suivant la revendication 1, caractérisé en ce que le système de pilotage du véhicule comprend une fonction de double suivi latéral d'obstacle, entre deux obstacles latéraux.

5. Procédé de création d'un trajet suivant la revendication 1, caractérisé en ce que le système de pilotage du véhicule comprend une fonction d'avance en ligne droite.

6. Procédé de restitution d'un trajet dans un environnement pourvu d'obstacles (B) et parsemé de bornes de repérage par un véhicule équipé, de capteurs des bornes (9), d'un système de pilotage (12) et d'un système de commande (11) sensible aux informations des capteurs, apte à commander le système de pilotage et comportant une mémoire (13), consistant à repérer le passage du véhicule sur des bornes de passage (M), caractérisé en ce qu'il consiste, quand une borne de passage est atteinte, à lire sur un tableau enregistré en mémoire des fonctions du système de pilotage et à activer ces fonctions jusqu'à la borne suivante, le véhicule comportant des capteurs des obstacles (2) et une des fonctions du système de pilotage étant une fonction de suivi latéral des obstacles.

7. Procédé de restitution d'un trajet suivant la revendication 6, caractérisé en ce que les bornes de passage sont identifiées et en ce que le tableau contient une information d'identification (m) des bornes de passage.

8. Procédé de restitution d'un trajet suivant la revendication 6, caractérisé en ce que le système de pilotage du véhicule comprend une fonction de double suivi latéral d'obstacle, entre deux obstacles latéraux.

9. Procédé de restitution d'un trajet suivant la revendication 6, caractérisé en ce que le système de pilotage du véhicule comprend une fonction d'avance en ligne droite.

## Patentansprüche

1. Verfahren zur Erzeugung einer Strecke in einer Umgebung, die Hindernisse (B) aufweist und versehen ist mit Bezugsmarken für ein Fahrzeug (1), das mit Sensoren (9) für die Marken, einem Lenksystem (12) und einem Steuersystem (11) ausgestattet ist, empfindlich für die Informationen der Sensoren, fähig das Lenksystem zu steuern und einen Speicher (13) umfassend, darin bestehend, die Marken zu lokalisieren, durch die die Strecke verläuft, **dadurch** **gekennzeichnet**, daß es darin besteht, die Strecke zu definieren, indem Funktionen des Lenksystems Teilen der Strecke zugeordnet werden, die durch die Marken getrennt werden, und im Speicher in Form einer Tabelle, gebildet durch Zeilen (L), von denen jede einer der Passiermarken (M) entspricht, aktive Funktionen des Lenksystems bei den jeweiligen Passiermarken aufzuzeichnen, wobei das Fahrzeug Sensoren für die Hindernisse (2) umfaßt und eine der Funktionen des Lenksystems eine Funktion zur seitlichen Umfahrung der Hindernisse (fonction de suivi latéral des obstacles) ist.

2. Verfahren zur Erzeugung einer Strecke nach Anspruch 1, dadurch gekennzeichnet, daß die Strecke graphisch definiert wird, die Passiermarken festgelegt werden, die anzuwendenden Funktionen des Lenksystems abgeleitet werden von der Form der Strecke, bezogen auf die Hindernisse, und dadurch, daß die Tabelle erstellt wird durch Erfassen der Passiermarken und, für jede der Passiermarken, der aktiven Funktionen des Lenksystems bei diesen Passiermarken.

3. Verfahren zur Erzeugung einer Strecke nach Anspruch 1, dadurch gekennzeichnet, daß die Strecke definiert wird, indem man sie vom Fahrzeug durchfahren läßt, wobei die Funktionen des Lenksystems manuell aktiviert werden, die Passiermarken (M) durch die Markensensoren (9) geortet werden, und dadurch, daß die Tabelle erstellt wird, indem man, sobald eine Passiermarke geortet wird, die bei diese Passiermarke aktiven Funktionen des Lenksystems aufzeichnet.

4. Verfahren zur Erzeugung einer Strecke nach Anspruch 1, dadurch gekennzeichnet, daß das Lenksystem des Fahrzeugs eine Funktion zur doppelten seitlichen Hindernisumfahrung umfaßt, zwischen zwei seitlichen Hindernissen.

5. Verfahren zur Erzeugung einer Strecke nach Anspruch 1, dadurch gekennzeichnet, daß das Lenksystem des Fahrzeugs eine Funktion für geradlinige Vorwärtsbewegung umfaßt.

6. Verfahren zur Wiedergabe einer Strecke in einer Umgebung, die Hindernisse (B) aufweist und versehen ist mit Bezugsmarken für ein Fahrzeug, das mit Sensoren (9) für die Marken, einem Lenksystem (12) und einem Steuersystem (11) ausgestattet ist, empfindlich für die Informationen der Sensoren, fähig das Lenksystem zu steuern und einen Speicher (13) umfassend, darin bestehend, die Durchfahrt des Fahrzeugs über Passiermarken (M) festzulegen, **dadurch** **gekennzeichnet**, daß es darin besteht, wenn eine Passiermarke erreicht ist, aus einer im Speicher aufgezeichneten Tabelle Funktionen des Lenksystems zu lesen und diese Funktionen bis zur nächsten Passiermarke zu aktivieren, wobei das Fahrzeug Sensoren für die Hindernisse (2) umfaßt und eine der Funktionen des Lenksystems eine Funktion zur seitlichen Umfahrung der Hindernisse ist.

7. Verfahren zur Wiedergabe einer Strecke nach Anspruch 6, dadurch gekennzeichnet, daß die Passiermarken identifiziert werden und dadurch, daß die Tabelle eine Identifikationsinformation (m) der Passiermarken enthält.

8. Verfahren zur Wiedergabe einer Strecke nach Anspruch 6, dadurch gekennzeichnet, daß das Lenksystem des Fahrzeugs eine Funktion zur doppelten seitlichen Hindernisumfahrung umfaßt, zwischen zwei seitlichen Hindernissen.

9. Verfahren zur Wiedergabe einer Strecke nach Anspruch 6, dadurch gekennzeichnet, daß das Lenksystem des Fahrzeugs eine Funktion für geradlinige Vorwärtsbewegung umfaßt.

## Claims

1. Method for creating a path in an environment provided with obstacles (B) and strewn with identification markers for a vehicle (1) equipped with sensors (9) for sensing the markers, with a navigation system (12) and with a control system (11) sensitive to the information from the sensors, capable of controlling the navigation system and including a memory (13), consisting in identifying the markers via which the path passes, characterized in that it consists in defining the path by associating functions of the navigation system to parts of the path separated by the markers, and in recording, in memory, in the form of a table made up of lines (L), each of which corresponds to one of the passage markers (M), functions of the navigation system which are active close to the respective passage markers, the vehicle including sensors (2) for sensing obstacles and one of the functions of the navigation system being a function of laterally following the obstacles.

2. Method for creating a path according to Claim 1, characterized in that the path is defined graphically, the passage markers are identified, the functions of the navigation system which are to be applied are deduced from the configuration of the path with respect to the obstacles, and in that the table is created by registering the passage markers and, for each of the passage markers, the functions of the navigation system which are active close to these passage markers.

3. Method for creating a path according to Claim 1, characterized in that the path is defined by making the vehicle travel along it, the functions of the navigation system being activated manually, the passage markers (M) are identified by the marker sensors (9), and in that the table is created by recording, as soon as a passage marker is identified, the functions of the navigation system which are active close to this passage marker.

4. Method for creating a path according to Claim 1, characterized in that the navigation system of the vehicle comprises a function for double lateral following of an obstacle, between two lateral obstacles.

5. Method for creating a path according to Claim 1, characterized in that the navigation system of the vehicle comprises a function for advancement in a straight line.

6. Method for restoring a path in an environment provided with obstacles (B) and strewn with markers for identification by a vehicle equipped with sensors (9) for sensing the markers, with a navigation system (12), and with a control system (11) sensitive to the information from the sensors, capable of controlling the navigation system and including a memory (13), consisting in identifying the passage of the vehicle over passage markers (M), characterized in that it consists, when a passage marker is reached, in reading from a table recorded in memory, functions of the navigation system and in activating these functions right up to the next marker, the vehicle including obstacle sensors (2) and one of the functions of the navigation system being a function of laterally following obstacles.

7. Method for restoring a path according to Claim 6, characterized in that the passage markers are identified and in that the table contains an item of information (m) for identifying passage markers.

8. Method for restoring a path according to Claim 6, characterized in that the navigation system of the vehicle comprises a function of double lateral following of an obstacle, between two lateral obstacles.

9. Method for restoring a path according to Claim 6, characterized in that the navigation system of the vehicle comprises a function for advancement in a straight line.
